# EUROPEAN PATENT APPLICATION

(11) **EP 4 316 878 A1**
(43) Date of publication of application: **07.02.2024**
(21) Application number: 22188173.3
(22) Date of filing: 01.08.2022
(51) Int. Cl.: B60H 1/00, B60H 1/32, B60K 35/00

(54) **METHOD OF OPERATING A TRANSPORT REFRIGERATION UNIT**

(71) Applicant: Carrier Fire & Security EMEA BV, 1831 Diegem (BE)
(72) Inventor: BEAUFRERE, Florian, 76520 Franqueville Saint Pierre (FR); CHAROULET, Guillaume, 76520 Franqueville Saint Pierre (FR)
(74) Representative: Dehns

(57) **Abstract**

A method of operating a transport refrigeration unit (130) of a vehicle (100) comprises determining a vehicle route from a current location of the vehicle (100) to a final destination of the vehicle (100); determining whether to operate a refrigeration system (150) of the transport refrigeration unit (130) in a normal mode or an economy mode; and operating the refrigeration system (150) in the economy mode. Operating the refrigeration system (150) in the economy mode comprises one or more of: (i) increasing a trigger temperature of the refrigeration system (150) relative to a trigger temperature of the refrigeration system (150) in the normal mode; (ii) operating a compressor (152), a condenser fan and/or an evaporator fan of the refrigeration system (150) at a lower power than in the normal mode, wherein the refrigeration system (150) provides more energy efficient cooling when the compressor, a condenser fan and/or an evaporator fan is operated at the lower power; and (iii) preventing a cooling operation of the refrigeration system (150) between a first intermediate destination and a second intermediate destination along the vehicle route.

## Description

The present invention relates to a method of operating a transport refrigeration unit, and a power system for a transport refrigeration unit.

Transport refrigeration units (TRUs) transport perishable or temperature-sensitive goods and consumables within logistics networks. TRUs generally regulate a monitored environment within a storage area, such as a compartment or trailer of a vehicle, where the goods are to be stored during transit. This includes Light Commercial Vehicles (LCVs) and trucks having trailers.

The monitored environment is regulated using a refrigeration system or the like, which in turn is powered by an energy source. Typically, this energy source includes a battery unit that is charged at a mains grid. The vehicle itself may be driven by a diesel engine and/or an additional battery unit.

Whilst existing TRU systems are suitable for their intended purpose, a demand exists for improved TRU systems.

Viewed from a first aspect of the present invention, there is provided a method of operating a transport refrigeration unit of a vehicle, wherein the transport refrigeration unit comprises a refrigeration system and a battery unit for powering the refrigeration system, the method comprising: determining a vehicle route from a current location of the vehicle to a final destination of the vehicle; determining whether to operate the refrigeration system in a normal mode or an economy mode; and operating the refrigeration system in the economy mode by performing one or more of: (i) increasing a trigger temperature of the refrigeration system relative to a trigger temperature of the refrigeration system in the normal mode; (ii) operating a compressor, condenser fan and/or evaporator fan of the refrigeration system at a lower power than in the normal mode, wherein the refrigeration system provides more energy efficient cooling when the compressor, condenser fan and/or evaporator fan is operated at the lower power; or (iii) preventing a cooling operation of the refrigeration system between a first destination and a second destination based on a distance between the first intermediate destination and the second intermediate destination.

During a normal mode of operation, the refrigeration system will be run so as to achieve optimal cooling by cooling to a temperature set-point as fast as possible and maintaining the temperature close to this set-point. However, should the battery unit run out of power, the refrigeration system could be without power for a considerable amount of time, which can cause cargo to spoil. Alternatively, the vehicle may need to stop at an intermediate destination in order to charge the battery unit at a charging station. However, this may cause delays in delivery of the cargo and can increase fuel costs associated with the journey, where the fuel may be petrol or diesel, or may be electricity. Thus, the present invention provides an economy mode of operation.

The method may comprise cooling a compartment of the vehicle using the refrigeration system.

The method may comprise charging the battery unit from a mains electric grid, such as when the vehicle is stationary. That is, the method may comprise charging the battery unit from the electric grid when the vehicle reaches the final destination or an intermediate destination.

The method may comprise receiving or determining a current location of the vehicle, and determining the vehicle route from the current location of the vehicle and the final destination of the vehicle.

The method may comprise predicting a power consumption of the refrigeration system. That is to say, the method may comprise determining a total amount of energy that will be consumed by the refrigeration system as the vehicle travels the determined vehicle route. The predicted power consumption may be determined through machine learning.

The method may comprise receiving or determining a number of stops along the vehicle route. The method may comprise receiving or determining a distance between stops on the vehicle route and/or a time between stops on the vehicle route. The method may comprise receiving traffic data and/or historic data from an external system.

The method may comprise receiving position data of the vehicle from a position determining system. The position data may comprise one or more of: a current location of the vehicle, an orientation of the vehicle and a speed of the vehicle. The position determining system may be a global positioning system (GPS) device.

The method may comprise predicting the power consumption using one or more of: the number of stops on the vehicle route, the distance between stops on the vehicle route, the time between stops on the vehicle route, the traffic data, the historic data, and the position data.

The method may comprise determining an available amount of power of the battery unit.

The method may comprise determining that the vehicle should operate in the economy mode when the predicted power consumption over at least part of the vehicle route is greater than a first threshold value.

The first threshold value is based on the available power of the battery unit. Thus, the method may comprise determining that the vehicle should operate in the economy mode when the predicted power consumption over at least part of the vehicle route is greater than the available amount of power. This may ensure that the refrigeration system does not remain without power for any amount of time.

The at least part of the vehicle route may comprise a part of the vehicle route between the current location of the vehicle and either the final destination of the vehicle or a battery charging location along the vehicle route.

The predicted power consumption rate may indicate that the battery unit will reach a power level at which it cannot power the refrigeration system (prior to the vehicle arriving at the final destination or intermediate destination. Thus, the method may comprise switching operation of the refrigeration system from the normal mode to the economy mode based on the predicted power consumption on the vehicle route.

The method may comprise determining that the vehicle should operate in the economy mode when the available amount of power of the battery unit is less than a second threshold value. The second threshold value may comprise less than 20%, less than 15%, less than 10%, or less than 5% of the maximum capacity of the battery unit.

Thus, method may comprise switching operation of the refrigeration system from the normal mode to the economy mode based on the available amount of power of the battery unit.

The method may comprise increasing a trigger temperature of the refrigeration system relative to a trigger temperature of the refrigeration system in the normal mode.

The method may comprise increasing a trigger temperature of the refrigeration system relative to a trigger temperature of the refrigeration system in the normal mode based on the predicted power consumption and/or available amount of power.

The trigger temperature may comprise a temperature at which a cooling operation of the refrigeration system is activated. The method may comprise setting the pre-set temperature manually. Alternatively, the method may comprise automatically determining the temperature based on a type of cargo to be transported in the vehicle, historic data, traffic data and/or weather data.

The method may comprise determining a temperature within the compartment, such as an average temperature . The temperature may be determined using a sensor. The sensor may be positioned within the compartment or within a return air passage of the compartment.

If the temperature exceeds the trigger temperature, the method may comprise activating a cooling operation of the refrigeration system, i.e. in order to reduce the average temperature within the compartment. However, activating the cooling operation increases the power consumption of the refrigeration system. Thus, by increasing the trigger temperature in the economy mode, it is possible to delay activation of the cooling operation, and hence preserve a power level of the battery unit.

The controller may be configured to operate a compressor, condenser fan and/or evaporator fan of the refrigeration system at a lower power than in the normal mode. The lower power may be a power above the lowest operating power of the compressor, condenser fan and/or evaporator fan. The refrigeration system may provide more energy efficient cooling when the compressor, condenser fan and/or evaporator fan is operated at the lower power.

The controller system may be configured to determine a distance between a first intermediate destination and a second intermediate destination. The first intermediate destination may comprise a current location of the vehicle. The second intermediate destination may comprise a vehicle stop, e.g. where the interior of the vehicle will be exposed to the external environment. Alternatively, the second intermediate destination may comprise the final destination or a battery charging location.

The controller may be configured to prevent a cooling operation of the refrigeration system when the distance between the first intermediate destination and the second intermediate destination is below a third threshold value. The third threshold value may comprise less than 1 mile, less than 2 miles, less than 3 miles, less than 4 miles, or less than 5 miles.

The method may comprise receiving a current speed of the vehicle, traffic data, and/or weather data from the external system.

The method may comprise predicting a travel time on the vehicle route. The method may comprise predicting the travel time based on the current speed of the vehicle, traffic data, and/or weather data. The predicted travel time may be determined through machine learning

The method may comprise preventing a cooling operation of the refrigeration system based on the predicted travel time between the first intermediate destination and the second intermediate destination.

The method may comprise preventing a cooling operation of the refrigeration system when the predicted travel time between the first intermediate destination and the second intermediate destination is less than a fourth threshold value. The fourth threshold value may comprise less than 5 minutes, less than 10 minutes, less than 15 minutes or less than 20 minutes. In this way, it is possible to preserve a battery level of the battery unit, and hence reduce costs associated with charging of the battery unit.

Viewed from a second aspect of the present invention, there is provided a transport refrigeration unit of a vehicle, the transport refrigeration unit comprising: a refrigeration system, a battery unit configured to supply electrical power to the refrigeration system; and a controller configured to: determine a vehicle route from a current location of the vehicle to a final destination of the vehicle; determine whether to operate the refrigeration system in a normal mode or an economy mode; and operate the refrigeration system in the economy mode by performing one or more of: (i) increasing a trigger temperature of the refrigeration system relative to a trigger temperature of the refrigeration system in the normal mode; (ii) operating a compressor, condenser fan and/or evaporator fan of the refrigeration system at a lower power than in the normal mode, wherein the refrigeration system provides more energy efficient cooling when the compressor, condenser fan and/or evaporator fan is operated at the lower power; or (iii) preventing a cooling operation of the refrigeration system between a first intermediate destination and a second intermediate destination along the vehicle route.

During a normal mode of operation, the refrigeration system will be run so as to achieve optimal cooling by cooling to a temperature set-point as fast as possible and maintaining the temperature close to this set-point. However, should the battery unit run out of power, the refrigeration system could be without power for a considerable amount of time, which can cause cargo to spoil. Alternatively, the vehicle may need to stop at an intermediate destination in order to charge the battery unit at a charging station. However, this may cause delays in delivery of the cargo and can increase costs associated with the journey. Thus, the controller is in the present invention is configured to provide an economy mode of operation.

The transport refrigeration unit may comprise an engineless transport refrigeration unit.

The refrigeration system may be configured to cool a compartment of the vehicle.

The battery unit may be configured to receive charge from a mains electric grid, such as when the vehicle is stationary. That is, the battery unit may be capable of receiving charge from the electric grid when the vehicle reaches the final destination or an intermediate destination. The controller may be configured to receive or determine the current location of the vehicle, and may be configured to determine the vehicle route from the current location of the vehicle and the final destination of the vehicle.

The controller may be configured to predict a power consumption of the refrigeration system. That is to say, the controller may be configured to determine a total amount of energy that will be consumed by the refrigeration system as the vehicle travels the determined vehicle route. The predicted power consumption may be determined through machine learning.

The controller may be configured to receive or determine a number of stops along the vehicle route. The controller may be configured to receive or determine a distance between stops on the vehicle route. The controller may be configured to receive traffic data and/or historic data from an external system.

The controller may be configured to receive position data of the vehicle from a position determining system. The position data may comprise one or more of: a current location of the vehicle, an orientation of the vehicle and a speed of the vehicle. The position determining system may be a global positioning system (GPS) device.

The controller may be configured to predict the power consumption using one or more of: the number of stops on the vehicle route, the distance between stops on the vehicle route, the traffic data, the historic data, and the position data.

The controller may be configured to determine an available amount of power of the battery unit.

The controller may be configured to determine that the vehicle should operate in the economy mode when the predicted power consumption over at least part of the vehicle route is greater than a first threshold value.

The first threshold value is based on the available power of the battery unit. Thus, the controller may be configured to determine that the vehicle should operate in the economy mode when the predicted power consumption over at least part of the vehicle route is greater than the available amount of power. This may ensure that the refrigeration system does not remain without power for any amount of time.

The at least part of the vehicle route may comprise a part of the vehicle route between the current location of the vehicle and either the final destination of the vehicle or a battery charging location along the vehicle route.

The predicted power consumption rate may indicate that the battery unit will reach a power level at which it cannot power the refrigeration system prior to the vehicle arriving at the final destination or an intermediate destination. Thus, the controller may be configured to switch operation of the refrigeration system from the normal mode to the economy mode based on the predicted power consumption on the vehicle route.

The controller may be configured to determine that the vehicle should operate in the economy mode when the available amount of power of the battery unit is less than a second threshold value. The second threshold value may comprise less than 20%, less than 15%, less than 10%, or less than 5% of the maximum capacity of the battery unit.

Thus, the controller may be configured to switch operation of the refrigeration system from the normal mode to the economy mode based on the available amount of power of the battery unit.

The controller may be configured to increase a trigger temperature of the refrigeration system relative to a trigger temperature of the refrigeration system in the normal mode.

The controller may be configured to increase a trigger temperature of the refrigeration system relative to a trigger temperature of the refrigeration system in the normal mode based on the predicted power consumption and/or available amount of power.

The trigger temperature may comprise a temperature at which a cooling operation of the refrigeration system is activated. The temperature may be pre-set by an operator of the vehicle. Alternatively, the controller may be configured to automatically determine the temperature based on a type of cargo to be transported in the vehicle, historic data, traffic data and/or weather data.

The controller may be configured to determine a temperature within the compartment, such as an average temperature. The temperature may be determined using a sensor. The sensor may be positioned at a predetermined location within the compartment.

If the temperature exceeds the trigger temperature, the controller may be configured to activate a cooling operation of the refrigeration system, i.e. in order to reduce the average temperature within the compartment. However, activating the cooling operation increases the power consumption of the refrigeration system. Thus, by increasing the trigger temperature in the economy mode, it is possible to delay activation of the cooling operation, and hence preserve a power level of the battery unit.

The controller may be configured to operate a compressor, condenser and/or evaporator of the refrigeration system at a lower power than in the normal mode. The lower power may be a power above the lowest operating power of the compressor, condenser and/or evaporator. The refrigeration system may provide more energy efficient cooling when the compressor, condenser and/or evaporator is operated at the lower power.

The controller system may be configured to determine a distance between a first intermediate destination and a second intermediate destination. The first intermediate destination may comprise a current location. The second intermediate destination may comprise the final destination or a battery charging location.

The controller may be configured to prevent a cooling operation of the refrigeration system when the distance between the first intermediate destination and the second intermediate destination is below a third threshold value. The third threshold value may comprise less than 1 mile, less than 2 miles, less than 3 miles, less than 4 miles, or less than 5 miles.

The controller may be configured to receive a current speed of the vehicle, traffic data, and/or weather data from the external system..

The controller system may be configured to predict a travel time on the vehicle route. The controller may be configured to predict a travel time based on the speed of the vehicle, the current traffic data, and/or the weather data. The predicted travel time may be determined through machine learning

The controller may be configured to prevent a cooling operation of the refrigeration system based on the predicted travel time between the first intermediate destination and the second intermediate destination.

The controller may be configured to prevent a cooling operation of the refrigeration system when the predicted travel time between the first intermediate destination and the second intermediate destination is less than a fourth threshold value. The fourth threshold value may comprise less than 5 minutes, less than 10 minutes, less than 15 minutes, or less than 20 minutes.

In this way, it is possible to preserve a battery level of the battery unit, and hence reduce costs associated with charging of the battery unit.

Viewed from a third aspect, there is provided a method of operating a transport refrigeration unit of a vehicle, wherein the transport refrigeration unit comprises a refrigeration system, the method comprising: determining a vehicle route from a current location of the vehicle to a final destination of the vehicle, the vehicle route comprising an intermediate destination between the current location of the vehicle and the final destination of the vehicle; determining a predicted travel time to the intermediate destination; and activating a pre-cooling operation of the refrigeration system when the predicted travel time to the intermediate destination is below a threshold value.

When the vehicle arrives at the final or intermediate destination, the temperature within the vehicle may be disturbed, e.g. by unloading of the vehicle. Such a disturbance may cause the temperature within the vehicle to rise above a desired temperature. Thus, the method may comprise activating a pre-cooling operation of the refrigeration prior to arrival at the final or intermediate destination.

The method may comprise cooling a compartment of the vehicle using the refrigeration system.

The method may comprise receiving or determining a current location of the vehicle, and determining the vehicle route from the current location of the vehicle and the final destination of the vehicle.

The method may comprise receiving a current speed of the vehicle, traffic data, and/or weather data from an external system. The external system may comprise a position determining system. The position determining system may be a global positioning system (GPS) device.

The method may comprise predicting the travel time to the intermediate destination based on the current speed of the vehicle, traffic data, and/or weather data. The predicted travel time may be determined through machine learning.

The pre-cooling operation may comprise cooling the compartment to a temperature lower than a desired temperature (e.g. at least 5 °C lower). The desired temperature may be a predetermined value. Alternatively, the desired temperature may be adjustable by an operator of the vehicle.

The pre-cooling operation may comprise reducing a temperature set-point of the refrigeration system relative to a temperature set-point of the refrigeration system in a normal mode.

The temperature set-point may comprise a target temperature of the refrigeration system. The method may comprise setting the target temperature manually. Alternatively, the method may comprise determining the target temperature based on a type of cargo to be transported in the vehicle, historic data, traffic data and/or weather data.

The method may comprise cooling the compartment until the average temperature within the compartment reaches the reduced temperature set-point. Thus, when the temperature set-point is reduced, the method may comprise activating a cooling operation of the refrigeration system. Once the average temperature within the compartment reaches the reduced temperature set-point, the method may comprise deactivating the cooling operation. Alternatively, the method may comprise maintaining the temperature within the compartment at the reduced temperature set-point until the vehicle arrives at the final or intermediate destination, at which point the method may comprise deactivating the cooling operation. In this way, the temperature within the compartment may be prevented from rising above a desired temperature when unloading.

The threshold value may comprise at least 5 minutes, at least 10 minutes, at least 15 minutes, or at least 20 minutes.

Viewed from a fourth aspect, there is provided a transport refrigeration unit of a vehicle, the transport refrigeration unit comprising: a refrigeration system, and a controller configured to: determine a vehicle route from a current location of the vehicle to a final destination of the vehicle, the vehicle route comprising an intermediate destination between the current location of the vehicle and the final destination of the vehicle; determine a predicted travel time to the intermediate destination; and activate a pre-cooling operation of the refrigeration system when the predicted travel time to the intermediate destination is below a threshold value.

When the vehicle arrives at the final or intermediate destination, the temperature within the vehicle may be disturbed, e.g. by unloading of the vehicle. Such a disturbance may cause the temperature within the vehicle to rise above a desired temperature. Thus, in the present invention, the controller is configured to activate a pre-cooling operation of the refrigeration system prior to arrival at the final or intermediate destination.

The refrigeration system may be configured to cool a compartment of the vehicle.

The controller may be configured to be in communication with a position determining system for determining the current location of the vehicle. The controller may be configured to communicate with the position determining system by either wired or wireless communication. Alternatively, the controller may comprise the position determining system.

The position determining system may be configured to determine a current location of the vehicle and may be configured to transmit the current location of the vehicle to the controller. The position determining system may be a global positioning system (GPS) device.

The controller may be configured to receive or determine a current location of the vehicle, and determining the vehicle route from the current location of the vehicle and the final destination of the vehicle.

The controller may be configured to receive a current speed of the vehicle, traffic data, and/or weather data from an external system. The external system may be the position determining system.

The controller may be configured to predict the travel time to the intermediate destination based on the current speed of the vehicle, traffic data, and/or weather data. The predicted travel time may be determined through machine learning.

The pre-cooling operation may comprise cooling the compartment to a temperature lower than a desired temperature (e.g. at least 5 °C lower). The desired temperature may be a predetermined value. Alternatively, the desired temperature may be adjustable by an operator of the vehicle.

The pre-cooling operation may comprise reducing a temperature set-point of the refrigeration system relative to a temperature set-point of the refrigeration system in a normal mode.

The temperature set-point may comprise a target temperature of the refrigeration system. The target temperature may be set by an operator of the vehicle. Alternatively, the controller may be configured to determine the target temperature based on a type of cargo to be transported in the vehicle, historic data, traffic data and/or weather data.

The controller may be configured to cool the compartment until the average temperature within the compartment reaches the reduced temperature set-point. Thus, when the temperature set-point is reduced, the controller may be configured to activate a cooling operation of the refrigeration system. Once the average temperature within the compartment reaches the reduced temperature set-point, the controller may be configured to deactivate the cooling operation. Alternatively, the controller may be configured to maintain the temperature within the compartment at the reduced temperature set-point until the vehicle arrives at the final or intermediate destination, at which point the controller may be configured to deactivate the cooling operation. In this way, the temperature within the compartment may be prevented from rising above a desired temperature when unloading.

The threshold value may comprise at least 5 minutes, at least 10 minutes, at least 15 minutes, or at least 20 minutes.

Certain preferred embodiments of the invention will now be described by way of example only and with reference to the accompanying drawings, in which:
Figure 1 shows a schematic representation of a vehicle having a transport refrigeration unit (TRU), and
Figure 2 shows a graph of cooling power and cooling efficiency against power consumption for a compressor of the TRU.

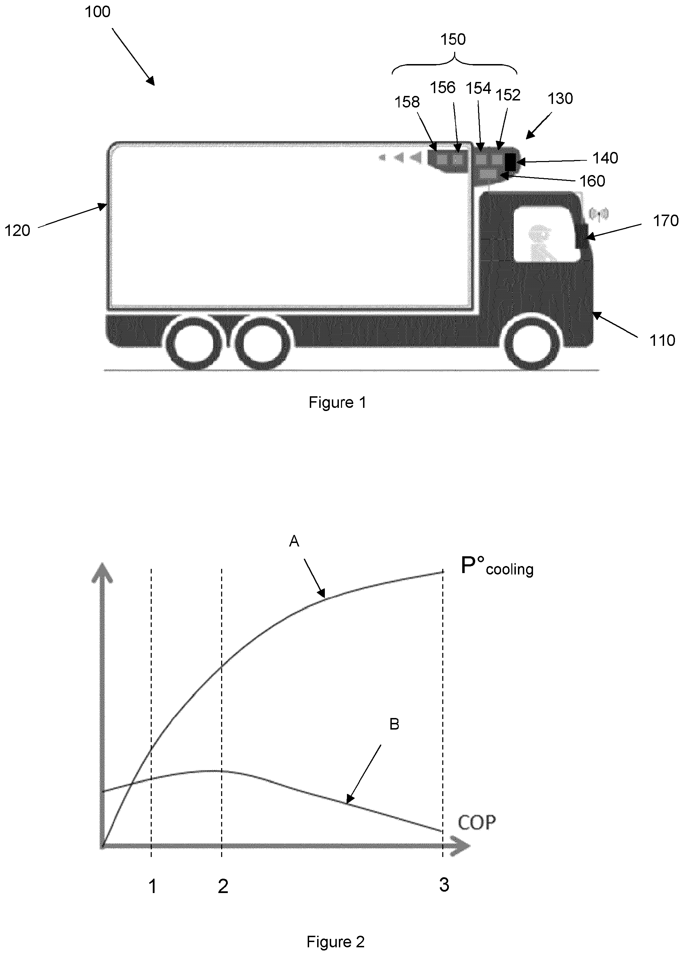

Figure 1 shows a schematic representation of a vehicle 100, which in the present illustration is a rigid truck comprising a tractor 110 and a trailer 120. The vehicle 100 comprises a transport refrigeration unit (TRU) 130 located in communication with the trailer 120. The TRU 130 is configured to regulate the environment within the trailer 120, e.g. by controlling a temperature and a humidity within the trailer 120. The TRU 130 is engineless and is therefore powered by a battery unit 140, which may be charged via a mains electric grid (not shown) when the vehicle 100 is stationary, e.g. at a destination of the vehicle 100.

The TRU 130 comprises a refrigeration system 150 configured to change environmental conditions within the trailer 120 of the vehicle 100. In this particular arrangement, the refrigeration system 150 comprises a plurality of components including a compressor 152, a condenser 154, an expansion device 156, and an evaporator 158. However, in various arrangements, the refrigeration system 150 may comprise any combination of components.

As illustrated, the TRU 130 comprises a controller 160 configured to control operation of the refrigeration system 150, while the battery unit 140 is configured to supply electrical power to the refrigeration system 150.

As illustrated, the controller 160 is in communication with a position determining system 170, e.g. a global positioning system (GPS) device, associated with the tractor 110 of the vehicle 100. The controller 160 may communicate with the position determining system 170 by either wired or wireless communication. The position determining system 170 may determine a current location of the vehicle 100. In alternative embodiments, the position determining system 170 may be incorporated within the controller 160.

During a normal mode of operation, the controller 160 will run the refrigeration system 150 so as to achieve optimal cooling of the trailer 120, i.e. by cooling to a temperature set-point as fast as possible and maintaining the temperature close to this set-point. However, since the TRU 130 is engineless, the battery unit 140 may not be charged until the vehicle 100 arrives at its final destination. Should the battery unit 140 run out of power, the refrigeration system 150 could therefore be without power for a considerable amount of time, which can cause cargo within the trailer 120 to spoil. Alternatively, the vehicle 100 may need to stop at an intermediate charging destination in order to charge the battery unit 140 at a charging station. However, this may cause delays in delivery of the cargo and can increase costs associated with the journey, such as fuel costs.

Thus, the controller 160 is configured to further provide an economy mode of operation. Under certain conditions, the controller 160 may operate the refrigeration system 150 in the economy mode of operation, as will now be discussed.

The controller 160 is configured to receive or determine a current location of the vehicle 100. Based on this information, the controller 160 can determine a vehicle route from a current location of the vehicle 100 to a final destination of the vehicle 100.

The controller 160 is further configured to determine whether to operate the refrigeration system 150 in the normal mode of operation or in the economy mode of operation based on the vehicle route.

Specifically, the controller 160 may be configured to predict a power consumption of the refrigeration system 150 on the determined vehicle route. That is to say, the total amount of energy that will be consumed by the refrigeration system 150 as the vehicle travels the determined vehicle route. The controller 160 may also be configured to determine an available amount of power from the battery unit 140.

An operator of the vehicle 100 may manually input, into the controller 160, a number of stops on the vehicle route. Alternatively, the controller 160 may be configured to determine a number of stops on the vehicle route using historic route data e.g. by machine learning. The stops may be delivery stops and/or battery charging locations.

The controller 160 may be configured to determine a time and/or a distance between each of the stops on the vehicle route. The controller 160 may also be configured to receive historic route data and/or traffic data.

The controller 160 also comprises data concerning the power demand of the TRU 130. Using this data and one or more of the number of stops on the vehicle route, the time and distance between each of the stops, the traffic data, and/or the historic route data, the controller 160 may be configured to predict the power consumption of the refrigeration system 150.

If the predicted power consumption over at least part of the vehicle route is greater than the available amount of power from the battery unit 140, the controller 160 may be configured to switch operation of the refrigeration system 150 from the normal mode of operation to the economy mode of operation. The at least part of the vehicle route may comprise a part of the determined vehicle route between the current location of the vehicle and either the final destination of the vehicle or an intermediate battery charging location along the vehicle route. For example, one or more of the delivery stops on the vehicle route may be a battery charging location. Alternatively, the battery charging location may be separate from the delivery stops.

In these conditions, the predicted power consumption may indicate that the battery unit 140 will reach a power level at which it cannot power the refrigeration system 150 prior to the vehicle 100 arriving at its destination, and so the refrigeration system 150 should be operated in an energy efficient manner. Optionally, this may be overridden. For example, this could be overridden manually by the driver, or automatically based on the determined route, for example if the vehicle is close to its final destination and is expected to run out of power only shortly before arrival of the vehicle at its final destination.

Thus, the controller 160 may be configured to switch operation of the refrigeration system 150 from the normal mode to the economy mode based on the predicted power consumption of the vehicle 100 on the vehicle route.

In various embodiments, if the available amount of power is less than a second threshold value (e.g. less than 20% of the maximum capacity of the battery unit 140), the controller 160 may be configured to switch operation of the refrigeration system from the normal mode of operation to the economy mode of operation.

In these embodiments, the available amount of power may indicate that the battery unit 140 has a low charge level, and so the refrigeration system 150 should be operated in an energy efficient manner. Optionally, this may be overridden as discussed above. For example, it may be overridden manually by the driver or automatically based on the determined route and/or the predicted power consumption, for example if the vehicle 100 is close to its final destination and is not expected to run out of power before arrival of the vehicle 100 at its final destination or is expected to run out of power only shortly before arrival of the vehicle 100 at its final destination.

Thus, the controller 160 may be configured to switch operation of the refrigeration system 150 from the normal mode to the economy mode based on the available amount of power of the battery unit 140.

In the economy mode, the controller 160 may be configured to increase a trigger temperature of the refrigeration system 150 relative to a trigger temperature of the refrigeration system 150 in the normal mode. For example, the controller 160 may be configured to increase the trigger temperature based on the predicted power consumption on the vehicle route and/or the available amount of power of the battery unit 140.

The trigger temperature is a temperature at which a cooling operation of the refrigeration system 150 is activated. The temperature may be pre-set by an operator of the vehicle 100. Alternatively, the controller 160 may be configured to automatically determine the temperature based on a type of cargo to be transported in the trailer 120, historic data, traffic data and/or weather data.

In operation, the controller 160 may be configured to determine at least one temperature within the trailer, such as an average temperature. If the temperature exceeds the trigger temperature, the controller 160 may be configured to activate a cooling operation of the refrigeration system 150 in order to reduce the average temperature within the trailer. However, activating the cooling operation increases the power consumption of the refrigeration system 150. Thus, by increasing the trigger temperature in the economy mode, it is possible to delay activation of the cooling operation, reduce power consumption, and therefore preserve the power level of the battery unit 140.

In the economy mode, the controller 160 may be configured to operate the compressor 152, a fan associated with the condenser 154 and/or a fan associated with the evaporator 158 of the refrigeration system 150 at a lower power than in the normal mode. For example, the refrigeration system 150 may provide more energy efficient cooling when the compressor 152, the condenser fan and/or the evaporator fan is operated at this lower power, as is shown in Figure 2.

Figure 2 shows a graph of cooling power and cooling efficiency against power consumption for a compressor 152 of the TRU 130. Similar behaviour may also be exhibited by the condenser fan and the evaporator fan.

Line A illustrates how cooling power output from the TRU 130 changes with electrical power input to the TRU 130. Line B illustrates the coefficient of performance for the TRU 130, which is calculated by dividing the power output from the TRU 130 by the power input to the TRU 130.

At point 1, less cooling power is output by the TRU 130 (i.e. less power is consumed by the TRU 130), and therefore less electrical power is required to be input to the TRU 130 from the battery unit 140. This allows the range of the battery unit 140 to be extended on a journey, particularly if a power level of the battery unit 140 is low (i.e. less than 20%) and/or the journey is long (i.e. greater than 50 km). However, operating the TRU 130 in such a manner means that the refrigeration system 150 is unable to maintain the environment within the trailer 120 at the temperature set-point. This is known as a safe mode of operation, and is not good for cargo within the trailer 120. Consequently, it is important to minimise the amount of time the TRU 130 operates in this mode of operation.

At point 3, a maximum cooling power is output by the TRU 130 (i.e. a maximum amount of power is consumed by the TRU 130), and therefore a maximum amount of electrical power is required to be input to the TRU 130 from the battery unit 140. This is beneficial for short journeys (i.e. less than 50 km) which do not require the range of the battery unit 140 to be extended. However, operating the TRU 130 in such a manner on long journeys (i.e. greater than 50 km) can cause the power level of the battery unit 140 to decrease to a level that is insufficient to supply electrical power to the refrigeration system 150. This power output is used during the normal mode of operation, and is not good when the power level of the battery unit 140 is low (i.e. less than 20%).

When there is a requirement for energy efficient operation the compressor 152 can be operated at point 2, where the coefficient of performance is greatest. Additionally, or alternatively, the condenser fan and/or the evaporator fan may be operated at an equivalent point where their respective coefficients of performance are greatest. In this mode of operation, there is a longer pull down, i.e. the trailer 120 is cooled more slowly, but less cooling power is consumed by the TRU 130, and that power is used at maximum cooling efficiency. This allows the range of the battery unit 140 to be extended without sacrificing cooling efficiency.

In the economy mode, the controller 160 may be configured to determine a distance between a first intermediate destination, e.g. a current destination, and a second intermediate destination, e.g. a delivery stop, battery charging location and/or final destination. Based on this, the controller 160 may be configured to determine whether to enable or disable cooling of the trailer 120 using the refrigeration system 150.

Alternatively, the controller 160 may be configured to predict a travel time between a first intermediate destination, e.g. a current destination, and a second intermediate destination, e.g. a delivery stop, battery charging location and/or final destination. For example, the controller 160 may be configured to determine how long it will take the vehicle 100 to arrive at the second intermediate destination based on a current speed of the vehicle 100, traffic data, and/or weather data. The controller 160 may then be configured to determine whether to enable or disable cooling of the trailer 120 using the refrigeration system 150.

When the determined distance indicates that the journey from the first intermediate destination to the second intermediate destination is short (e.g. less than 5 miles) or when the predicted travel time indicates that the journey from the first destination to the second destination is short (e.g. less than 5 minutes), it may not be desirable to supply electrical power to the refrigeration system 150. This may be the case, for example, if the second intermediate destination does not comprise a means to charge the battery unit 140 and it therefore becomes important to preserve the battery level of the battery unit 140. In other cases, it may be that supplying electrical power to the refrigeration system 150 makes little difference to the environment within the trailer because the temperature will increase at the next stop.

Thus, in the economy mode, the controller 160 may be configured to prevent a cooling operation of the refrigeration system 150 between a first intermediate destination and a second intermediate destination. In particular, the controller 160 may be configured to prevent a cooling operation of the refrigeration system 150 based on the distance between the first intermediate destination and the second intermediate destination or the predicted travel time from the first intermediate destination to the second intermediate destination.

For example, if the distance between the first intermediate destination and the second intermediate destination is less than a third threshold value (e.g. less than 5 miles), the controller 160 may be configured to prevent a cooling operation of the refrigeration system 150. Alternatively, if the predicted travel time from the first intermediate destination to the second intermediate destination is less than a fourth threshold value (e.g. less than 5 minutes), the controller 160 may be configured to prevent a cooling operation of the refrigeration system 150. In this way, it is possible to preserve a battery level of the battery unit 140 or reduce costs associated with charging of the battery unit 140.

Whilst energy efficient operation may be important when the battery 140 is at risk of running out of power, the controller 160 may advantageously take advantage of the route data and the current position data to improve cooling performance during the normal mode of operation, i.e. when the battery 140 contains sufficient charge to complete the route.

When the vehicle 100 arrives at an intermediate destination, the environment within the trailer 120 may be disturbed, i.e. by unloading of the trailer 120. For example, the average temperature within the trailer 120 may increase to an undesirable temperature.

Thus, when the vehicle 100 is operating in the normal mode of operation, the controller 160 may be configured to activate a pre-cooling mode operation of the refrigeration system 150 based on a predicted travel time to the intermediate destination. In particular, the controller 160 may be configured to activate a pre-cooling operation of the refrigeration system 150 if the predicted travel time is less than a fifth threshold value (e.g. less than 5 minutes).

The pre-cooling operation may comprise cooling the environment within the trailer 120 to a temperature lower than a normal temperature set-point (e.g. 5 °C lower). For example, the pre-cooling operation may comprise reducing a temperature set-point of the refrigeration system 150 relative to a temperature set-point of the refrigeration system 150 in the normal mode of operation.

The temperature set-point is a target temperature of the refrigeration system 150. The target temperature may be set by an operator of the vehicle 100. Alternatively, the controller 160 may be configured to determine the target temperature based on a type of cargo to be transported in the trailer 120, historic data, traffic data and/or weather data.

In operation, the controller 160 may be configured to cool the environment within the trailer 120 until the average temperature reaches the reduced temperature set-point. Thus, in these embodiments, when the temperature set-point is reduced, the controller 160 may be configured to activate a cooling operation of the refrigeration system 150. Once the average temperature within the trailer 120 reaches the reduced temperature set-point, the controller 160 may be configured to deactivate the cooling operation. Alternatively, the controller 160 may be configured to maintain the average temperature within the trailer 120 at the reduced temperature set-point until the vehicle 100 arrives at the second intermediate destination, at which point the controller 160 may be configured to deactivate the cooling operation. In this way, the average temperature within the trailer 120 may be prevented from rising above an undesired temperature when unloading.

## Claims

1. A method of operating a transport refrigeration unit of a vehicle, wherein the transport refrigeration unit comprises a refrigeration system and a battery unit for powering the refrigeration system, the method comprising:
determining a vehicle route from a current location of the vehicle to a final destination of the vehicle;
determining whether to operate the refrigeration system in a normal mode or an economy mode; and
operating the refrigeration system in the economy mode by performing one or more of:
(i) increasing a trigger temperature of the refrigeration system relative to a trigger temperature of the refrigeration system in the normal mode;
(ii) operating a compressor, a condenser fan and/or an evaporator fan of the refrigeration system at a lower power than in the normal mode, wherein the refrigeration system provides more energy efficient cooling when the compressor, a condenser fan and/or an evaporator fan is operated at the lower power; and
(iii) preventing a cooling operation of the refrigeration system between a first intermediate destination and a second intermediate destination along the vehicle route.

2. A method according to claim 1, wherein determining whether to operate the refrigeration system in the normal mode or the economy mode comprises determining that the vehicle should operate in the economy mode when a predicted power consumption over at least part of the vehicle route is greater than a first threshold value.

3. A method according to claim 2, wherein the first threshold value is based on an available power of the battery unit

4. A method according to claim 2 or 3, wherein the at least part of the vehicle route comprises a part of the vehicle route between the current location of the vehicle and either the final destination of the vehicle or a battery charging location along the vehicle route.

5. A method according to any preceding claim, wherein determining whether to operate the refrigeration system in the normal mode or the economy mode comprises determining that the vehicle should operate in the economy mode when an available power of the battery unit is less than a second threshold value.

6. A method according to any preceding claim, wherein a distance between the first intermediate destination and the second intermediate destination is less than a third threshold value or when a predicted travel time between the first intermediate destination and the second intermediate destination is less than a fourth threshold value.

7. A transport refrigeration unit for a vehicle, the transport refrigeration unit comprising:
a refrigeration system;
a battery unit configured to supply electrical power to the refrigeration system; and
a controller configured to:
determine a vehicle route from a current location of the vehicle to a final destination of the vehicle;
determine whether to operate the refrigeration system in a normal mode or an economy mode; and
operate the refrigeration system in the economy mode by performing one or more of:
(i) increasing a trigger temperature of the refrigeration system relative to a trigger temperature of the refrigeration system in the normal mode;
(ii) operating a compressor, a condenser fan and/or an evaporator fan of the refrigeration system at a lower power than in the normal mode, wherein the refrigeration system provides more energy efficient cooling when the compressor, a condenser fan and/or an evaporator fan is operated at the lower power; and
(iii) preventing a cooling operation of the refrigeration system between a first intermediate destination and a second intermediate destination along the vehicle route.

8. A transport refrigeration unit according to claim 7, wherein the control system is configured to determine that the vehicle should operate in the economy mode when a predicted power consumption over at least part of the vehicle route is greater than a first threshold value.

9. A transport refrigeration unit according to claim 8, wherein the first threshold value is based on an available power of the battery unit

10. A transport refrigeration unit according to claim 8 or 9, wherein the at least part of the vehicle route comprises a part of the vehicle route between the current location of the vehicle and either the final destination of the vehicle or a battery charging location along the vehicle route.

11. A transport refrigeration unit according to any of claims 7-10, wherein the control system is configured to determine that the vehicle should operate in the economy mode when an available power of the battery unit is less than a second threshold value.

12. A transport refrigeration unit according to any of claims 7-11, wherein a distance between the first intermediate destination and the second intermediate destination is less than a third threshold value or when a predicted travel time between the first intermediate destination and the second intermediate destination is less than a fourth threshold value.

13. A method of operating a transport refrigeration unit of a vehicle, wherein the transport refrigeration unit comprises a refrigeration system, the method comprising:
determining a vehicle route from a current location of the vehicle to a final destination of the vehicle, the vehicle route comprising an intermediate destination between the current location of the vehicle and the final destination of the vehicle;
determining a predicted travel time to the intermediate destination; and
activating a pre-cooling operation of the refrigeration system when the predicted travel time to the intermediate destination is below a threshold value.

14. A method according to claim 13, wherein the pre-cooling operation comprises reducing a temperature set-point of the refrigeration system relative to a temperature set-point of the refrigeration system in a normal mode.

15. A transport refrigeration unit of a vehicle, the transport refrigeration unit comprising:
a refrigeration system; and
a controller configured to:
determine a vehicle route from a current location of the vehicle to a final destination of the vehicle, the vehicle route comprising an intermediate destination between the current location of the vehicle and the final destination of the vehicle;
determine a predicted travel time to the intermediate destination; and
activate a pre-cooling operation of the refrigeration system when the predicted travel time to the intermediate destination is below a threshold value.
